# EUROPÄISCHE PATENTSCHRIFT

(11) **EP 1 131 234 B1**
(45) Veröffentlichungstag und Bekanntmachung des Hinweises auf die Patenterteilung: **08.02.2006**
(21) Anmeldenummer: 99941400.6
(22) Anmeldetag: 30.06.1999
(51) Int. Cl.: B60S 1/38

(54) **WISCHBLATT FÜR SCHEIBEN VON KRAFTFAHRZEUGEN MIT EINEM LANGGESTRECKTEN, FEDERLASTISCHEN TRAGELEMENT**
WIPER BLADE FOR THE GLASS SURFACES OF MOTOR VEHICLES WITH AN ELONGATED, SPRING-ELASTIC SUPPORT ELEMENT
BALAI D'ESSUIE-GLACE POUR DES VITRES DE VEHICULES AUTOMOBILES A ELEMENT SUPPORT ALLONGE ET DEFORMABLE

(43) Veröffentlichungstag der Anmeldung: 12.09.2001
(73) Patentinhaber: ROBERT BOSCH GMBH, 70442 Stuttgart (DE)
(72) Erfinder: WILHELM, Manfred, D-71735 Eberdingen (DE); KOTLARSKI, Thomas, D-77830 Buehlertal (DE); MAZURKIEWICZ, Julius, B-3290 Diest (BE)
(86) Internationale Anmeldenummer: PCT/DE1999/001880
(87) Internationale Veröffentlichungsnummer: WO 2001/002224

(56) Entgegenhaltungen:
- EP-A- 0 646 507
- DE-A- 19 650 159
- DE-A- 19 802 451
- US-A- 3 427 637
- US-A- 4 360 943
- US-A- 5 052 072

## Beschreibung

### Stand der Technik

Bei Wischblättern der im Oberbegriff des Anspruchs 1 bezeichneten Art soll, die in der US-A-3 785 002 dargestellt ist, das Tragelement über das gesamte vom Wischblatt bestrichene Wischfeld eine möglichst gleichmäßige Verteilung des vom Wischerarm ausgehenden Wischblatt-Anpreßdrucks an der Scheibe gewährleisten. Durch eine entsprechende Krümmung des unbelasteten Tragelements - also wenn das Wischblatt nicht an der Scheibe anliegt - werden die Enden der im Betrieb des Wischblatts vollständig an der Scheibe angelegten Wischleiste durch das-dann gespannte Tragelement zur Scheibe belastet, auch wenn sich die Krümmungsradien von sphärisch gekrümmten Fahrzeugscheiben bei jeder Wischblattposition ändern. Die Krümmung des Wischblatts muß also etwas stärker sein als die im Wischfeld an der zu wischenden Scheibe-gemessene stärkste Krümmung. Das Tragelement ersetzt somit die aufwendige Tragbügelkonstruktion mit zwei in der Wischleiste angeordneten Federschienen, wie sie bei herkömmlichen Wischblättern praktiziert wird (DE-OS 15 05 397).

Die Erfindung geht aus von einem Wischblatt nach der Gattung des Anspruchs 1. Bei einem bekannten Wischblatt dieser Art (US-PS 3,785,002) ist an dessen beiden Endabschnitten je ein schildartiges Abschlußteil angeordnet, daß mit einer vergleichsweise langen Zunge auf der von der Scheibe abgewandten Oberseite des aus zwei übereinanderliegenden Blattfedern aufgebauten Tragelements anliegt und zur Sicherung der Montageposition in Längsrichtung mit einem Nocken in einer Ausnehmung der oberen Blattfeder greift. Quer zur Wischblatt-Längserstreckung erfolgt die Positionssicherung durch eine tunnelartige Ausbildung der Wischleiste an deren beiden Endbereichen, welche das Tragelement samt den Zungen der beiden Abschlußteile umgeben. Die so fixierten Abschlußteile decken die Enden der Wischleiste im Bereich des scharfkantigen Tragelements vollständig ab. Der Aufbau des bekannten Wischblatts erfordert kostenintensive Herstellungsverfahren sowohl für die Wischleiste, als auch für das Tragelement und die Abschlußteile. Weiter erfordert die Montage des bekannten Wischblatts mehrere, nur von Hand ausführbare Montageschritte. Schließlich werden durch die Zungen der Abschlußteile die Enden des Tragelements versteift, was sich - insbesondere bei sphärisch gekrümmten Scheiben - ungünstig auf die angestrebte, gleichmäßige Verteilung des Anpreßdrucks der Wischleiste an der Scheibe auswirkt.

### Vorteile der Erfindung

Bei dem erfindungsgemäßen Wischblatt mit den kennzeichnenden Merkmalen des Anspruchs 1 kann das Abschlußteil so kurz ausgeführt werden, daß eine Beeinträchtigung der Elastizität des Tragelements nicht erfolgt. Die Wischleiste kann über ihre gesamte Länge einen gleichbleibenden Querschnitt aufweisen, so daß sie kostengünstig im Extrusionsverfahren herzustellen ist. Auch die Montage der beiden Abschlußteile erfolgt auf einfache Weise durch Aufrasten auf das Tragelement bzw. auf das schon vormontierte Wischblatt, bei dem die Wischleiste am Tragelement gehalten ist. Dieses Aufrasten kann gegebenenfalls durch eine automatisch arbeitende Montagestation vorgenommen werden. Die so aufgerasteten Abschlußteile verhindern Verletzungen von mit dem Wischblatt umgehenden Personen, durch die in der Regel scharfkantigen Enden des Tragelements.

Wenn das Tragelement als einteiliges Federband ausgebildet ist an dessen einer der Scheibe zugewandten Bandfläche die Wischleiste befestigt ist und aus dessen anderer, von der Scheibe abgewandten Bandfläche die Rastschulter ragt, kann das Tragelement kostengünstig und abfallos aus Federbandstahl hergestellt werden.

Bei einer so gebildeten Rastschulter ist es zweckmäßig, wenn an der dem Tragelement zugewandten Seite des Abschlußteil-Grundkörpers eine Auskehlung angeordnet ist, an welcher die Gegenschulter des Abschlußteils ausgebildet ist.

Bei bestimmten, vorteilhaften Herstellungsverfahren für das Tragelement können den Endbereichen des Tragelements an dessen Längsseiten Vorsprünge verbleiben, welche ein sauberes Aufrasten der Abschlußteile auf das Tragelement erschweren. Diese Beeinträchtigungen werden vermieden, wenn in den das Tragelement querenden Hakenschenkeln der hakenartigen Ansätze des Abschlußteils Aushöhlungen zur Aufnahme von aus den Tragelement-Längsseiten ragenden Vorsprüngen angeordnet sind.

Bei bestimmten Ausführungen des Wischblatts kann es vorteilhaft sein, wenn das Tragelement als einteiliges Federband ausgebildet ist, an dessen einer der Scheibe zugewandten Bandfläche die Wischleiste befestigt ist und an wenigstens einer der beiden Tragelement-Längsseiten die Rastschulter ausgebildet ist. Dabei ist es möglich, die Rastschulter an einer seitlich am Tragelement angeordneten, randoffenen, parziellen Ausnehmung vorzusehen.

Eine preiswerte Ausbildung der Gegenschulter wird erreicht, wenn an den das Tragelement querenden Hakenschenkeln der hakenartigen Ansätze des Abschlußteils die Gegenschulter ausgebildet ist.

Insbesondere dann, wenn sich die Breite des Tragelements zu seinen beiden Enden hin verjüngt ist es vorteilhaft, wenn die Rastschulter an einem aus der Tragelement-Längsseite vorspringenden Rastzahn ausgebildet ist.

Bei einem anderen, in bestimmten Fällen zweckmäßigen Fertigungsverfahren für das Tragelement können den stirnseitigen Enden des Tragelements kleine Vorsprünge verbleiben, welche ein Aufrasten der Abschlußteile auf das Tragelement behindern. Bei der Anwendung eines solchen Verfahrens hat es sich als vorteilhaft erwiesen, wenn an der die Stirnseite des Rastelements abdeckenden Innenwand des Abschlußteils eine Ausnehmung zur Aufnahme eines aus der Tragelement-Stirnseite ragenden Vorsprung angeordnet ist.

Eine weitere Ausführungsform des erfindungsgemäßen Wischblatts zeichnet sich dadurch aus, daß die das Tragelement querenden, die der Scheibe zugewandten Seite des Tragelement hintergreifenden hakenartigen Ansätze durch je ein Filmgelenk mit dem Grundkörper des Abschlußteils verbunden sind. Es ergibt sich dadurch eine besonders einfache Montage der Abschlußteile am Tragelement, weil diese lediglich in ihre Betriebsstellung auf das Tragelement bzw. auf das mit der Wischleiste schon ausgestattete Tragelement aufgesetzt wird, wonach die hakenartigen Ansätze nur noch in ihre Sicherungspositionen geklappt werden müssen.

Eine zusätzliche Sicherung der Verbindung zwischen Tragelement und Wischleiste ergibt sich, wenn die Wischleiste an ihren beiden Längsseiten je eine Längsnut aufweist, in welche die gegeneinander gerichteten, an den Hakenschenkeln angeordneten Krallenschenkel des Abschlußteils hineingreifen.

Gemäß einer weiteren, für bestimmte Anwendungsfälle zweckdienlichen Ausführungsform des erfindungsgemäßen Wischblatts hat das Tragelement zwei langgestreckte, federelastische Halteschienen, welche je einer an den beiden Längsseiten der Wischleiste vorhandenen Längsnuten der Wischleiste angeordnet sind und die Halteschienen mit ihren voneinander abgewandten Längskanten aus ihren Längsnuten der Wischleiste ragen, wobei an wenigstens einer dieser Längskanten die Rastschulter ausgebildet ist.

Bei einem derart aufgebauten Wischblatt ist die der Rastschulter der Halteschienen zugeordnete Gegenschulter des Abschlußteils an den das die beiden Halteschienen aufweisende Tragelement querenden hakenartigen Ansätze angeordnet. Neben der einfachen Montage der Abschlußteile ergibt sich ohne weiteren Aufwand eine zuverlässige Sicherung der beiden Halteschienen in ihren Montagepositionen der Wischleiste.

Die angestrebte einfache Befestigung der Abschlußteile am Tragelement bzw. am Wischblatt nebst deren preiswerter Herstellung läßt sich besonders gut realisieren, wenn das Abschlußteil aus einem elastischen Kunststoff gefertigt ist.

Weitere vorteilhafte Weiterbildungen und Ausgestaltungen der Erfindung sind in der nachfolgenden Beschreibung von in der dazugehörigen Zeichnung dargestellten Ausführungsbeispielen angegeben.

### Zeichnung

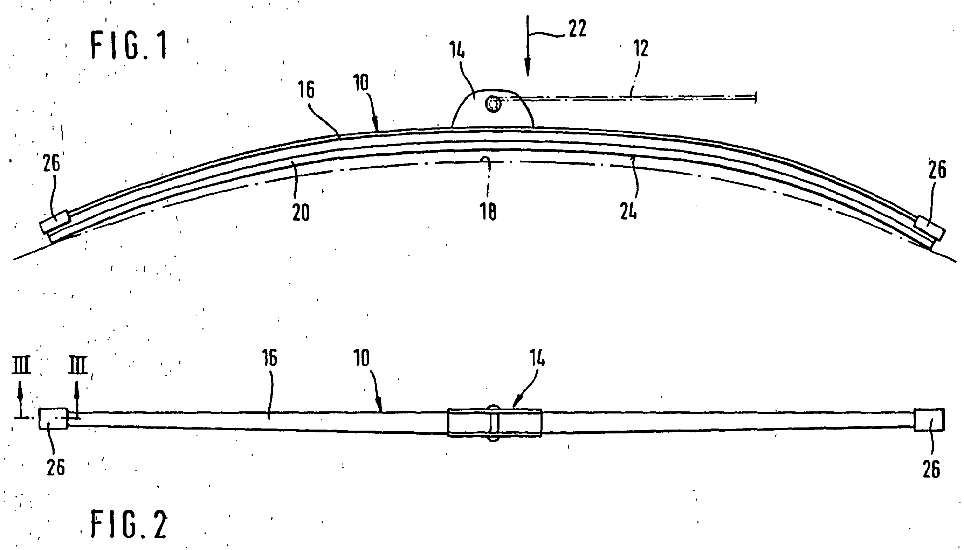

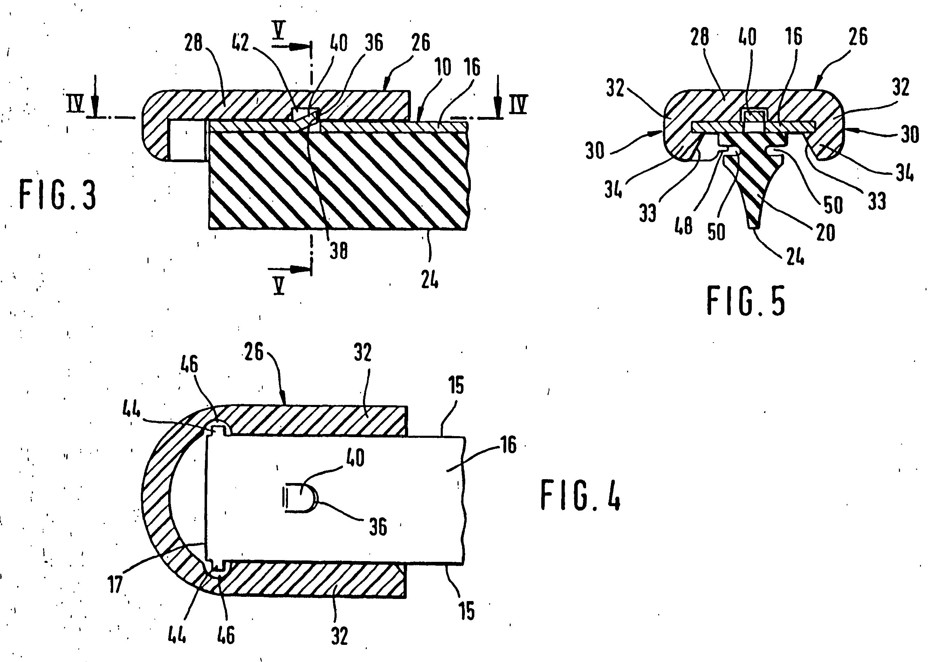

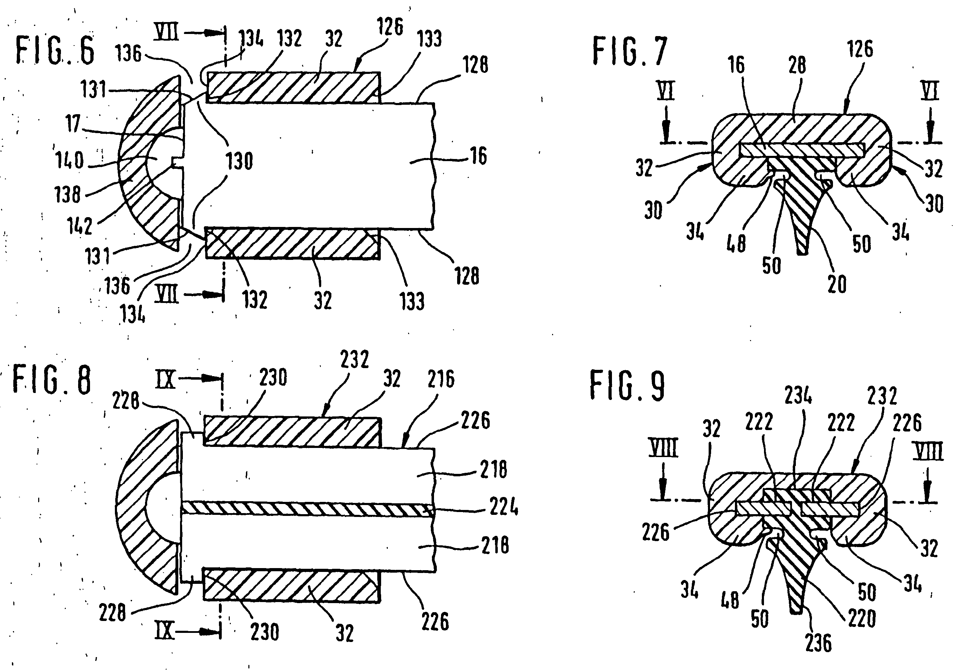

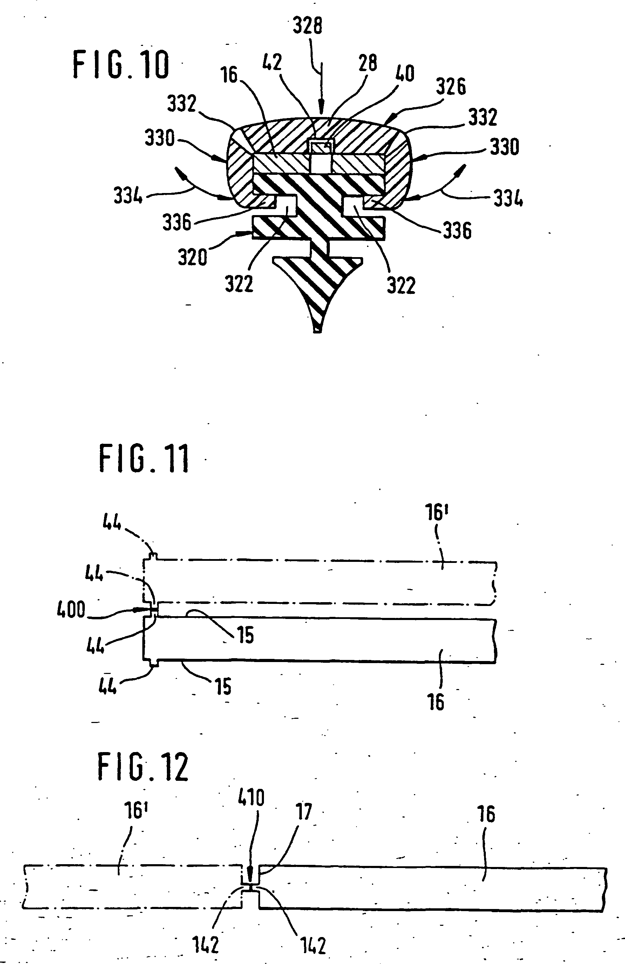

In der Zeichnung zeigen: Figur 1 das erfindungsgemäße Wischblatt in Seitenansicht, Figur 2 eine Draufsicht auf das Wischblatt gemäß Figur 1, Figur 3 einen Längsschnitt durch das eine Ende des Wischblatts entlang der Linie III-III in Figur 2 in vergrößerter Darstellung, Figur 4 einen Schnitt durch die Anordnung gemäß Figur 3 entlang der Linie IV-IV, Figur 5 einen Querschnitt durch die Anordnung gemäß Figur 3 entlang der Linie V-V, Figur 6 einen Schnitt gemäß Figur 4 entlang der Linie VI-VI in Figur 7 um 90° gedreht, durch eine andere Ausführungsform der Erfindung, Figur 7 einen Schnitt durch die Anordnung gemäß Figur 6 entlang der Linie VII-VII, Figur 8 einen Schnitt gemäß Figur 4 entlang der Linie VIII-VIII in Figur 9 um 90° gedreht gezeichnet, durch eine weitere Ausführungsform der Erfindung, Figur 9 einen Schnitt durch die Anordnung gemäß Figur 8 entlang der Linie IX-IX, Figur 10 einen Schnitt gemäß Figur 5 durch eine weitere Ausführungsform die zur Erfindung nicht gehört, Figur 11 eine verkleinerte Teilskizze eines zum Wischblatt gehörenden Tragelements zur Erläuterung eines möglichen Herstellungsverfahrens für das Tragelement und Figur 12 eine Teilskizze gemäß Figur 11 für ein anderes Fertigungsverfahren für das Tragelement.

### Beschreibung der Ausführungsbeispiele

Ein in den Figuren 1 und 2 dargestelltes Wischblatt 10 gehört zu einer Wischvorrichtung für Scheiben von Kraftfahrzeugen. Das Wischblatt 10 ist an einem zur Wischvorrichtung gehörenden, angetriebenen, strichpunktiert gezeichneten Wischerarm 12 befestigt. Es weist dazu eine Anschlußvorrichtung 14 auf, mit welcher es mit dem freien Ende des Wischerarms 12 gelenkig verbunden ist. Das Wischblatt 10 hat ein langgestrecktes, federelastisches Tragelement 16, an dessen einer, einer Scheibe 18 des Kraftfahrzeuges zugewandten Bandfläche eine langgestreckte, gummielastische Wischleiste 20 längsachsenparallel gehalten, beispielsweise angeklebt ist. An der anderen, von der Windschutzscheibe 18 abgewandten Bandfläche des Tragelements 16 sitzt die Anschlußvorrichtung 14 für den Wischerarm 12. Der Wischerarm 12 und damit auch das Wischblatt 10 sind in Richtung des Pfeiles 22 zur in Figur 1 strichpunktiert angedeuteten Windschutzscheibe 18 des Kraftfahrzeuges belastet, an welche die zum Wischblatt 10 gehörende Wischleiste 20 anlegbar ist. In dieser Betriebsposition wird das Wischblatt 10 durch den Wischerarm 12 quer zu seiner Längserstreckung über die Scheibe 18 verschoben, um deren Oberfläche zu reinigen. Das Wischblatt 10 ist jedoch in Figur 1 in einer Position dargestellt, in der lediglich seine beiden Enden die Scheibe 18 berühren. Dazu ist - wie aus Figur 1 entnehmbar - das unbelastete Wischblatt stärker gekrümmt als die Scheibe 18. Da in Figur 1 die stärkste Krümmung der Scheibenoberfläche dargestellt ist, ist klar ersichtlich, daß die Krümmung des mit seinen beiden Enden an der Scheibe 18 anliegenden Wischblatts 10 stärker ist als die maximale Scheibenkrümmung. Unter dem Anpreßdruck (Pfeil 22) legt sich das Wischblatt mit seiner Wischlippe 24 über deren gesamte Länge an der Scheibe an. Dabei baut sich im federelastischen Tragelement 16 eine Spannung auf, welche -für eine ordnungsgemäße Anlage der Wischleiste bzw. der Wischlippe über deren gesamte Länge an der Scheibe 18 sorgt.

Im folgenden soll auf die besondere Ausgestaltung des wischblatt 10 näher eingegangen werden. Wie die Figuren 1 und 2 zeigen ist an jedem der beiden Enden des Wischblatts 10 ein Abschlußteil 26 angeordnet, welches die stirnseitigen Endkanten 17 des Tragelements 16 abdecken. Die Abschlußteile 26 sollen insbesondere bei aus einem Federbandstahl hergestellten Tragelementen 16 die Verletzungsgefahr durch die scharfkantigen, stirnseitigen Enden 17 des Tragelements 16 verhindern, wenn der Endverbraucher des Wischblatts 10 beispielsweise beim Wischblattaustausch unsachgemäß mit diesem umgeht.

Wie die Figuren 3 bis 5 einer ersten Ausführungsform des Abschlußteils 26 zeigen, hat das Abschlußteil einen im wesentlichen plattenförmigen Grundkörper 28, der sich an der von der Scheibe abgewandten Seite des Tragelements 16 an diesem bzw. am Wischblatt 10 abstützt. Figur 5 zeigt, daß an dem Grundkörper 28 hakenartige Ansätze 30 angeordnet sind, welche die beiden Längsseiten des Tragelements 16 mit Schenkeln 32 queren und mit an diese anschließenden, gegeneinander gerichteten Krallen 34 das Tragelement hintergreifen. Da bei diesem Ausführungsbeispiel das Tragelement 16 breiter ist als die Wischleiste 20, umfassen die Ansätze 30 lediglich die Seitenbereiche des Tragelements 16. Zur Sicherung der Abschlußteile 26 am Tragelement 16 in dessen Längsrichtung ist an jedem der beiden Tragelementabschnitte eine zu deren anderen Endabschnitt weisende Rastschulter 36 angeordnet, der eine im Grundkörper 28 des Abschlußteils 26 vorgesehene Gegenschulter 38 zugeordnet ist. Die Rastschulter 36 des als einteiliges Federband ausgebildeten Tragelements 16 ist an der zum anderen Tragelementende weisenden Kante eines aus dem Federband ausgescherten, zu der von der Wischleiste 20 abgewandten Bandfläche des Tragelements durchgedrückten, dreiseitig freigeschnittenen Federlappens 40 ausgebildet, der in Figur 4 nicht geschnitten dargestellt ist. Dieser Federlappen ragt in Montageposition des Abschlußteils 16 (Figur 3) in eine diesem zugewandte Auskehlung 42 des Grundkörpers 28 und die der Rastschulter 36 zugewandte Wand der Auskehlung 42 bildet die mit der Rastschulter 36 zusammenwirkende Gegenschulter 38. Die Montage der Abschlußteile 26 auf das Tragelement 16 kann dadurch erreicht werden, daß dieses in Längsrichtung des Tragelements 16 auf dieses aufgeschoben wird. Da das Abschlußteil aus einem eleastischen Kunststoff gefertigt ist, kann dieses während der Montage vorübergehend elastisch auslenken, bis es in seine endgültige Position gelangt. Weiter ist es möglich, auch den Federlappen 40 elastisch nachgiebig auszubilden, so daß er vorübergehend auszuweichen vermag, bis er in die Auskehlung 42 einrastet. Bei bestimmten Herstellungsverfahren für das Tragelement 16 ist es möglich, daß an den seitlichen Endbereichen 15 des Tragelements 16 kleine Vorsprünge 44 verbleiben, deren Ursprung später erläutert wird. Damit eine ordnungsgemäße Montage der Abschlußteile 26 möglich ist, sind in den das Tragelement 16 querenden Schenkeln 32 des Abschlußteils 26 Aushöhlungen 46 zur Aufnahme der Vorsprünge 44 angeordnet. Die Montage erfolgt in diesem Fall von oben, wobei die hakenartigen Ansätze 30 zur Seite hin ausgelenkt werden. Die Krallen 34 weisen dazu Auslenkschrägen 33 auf, die beim Aufclipsen ein Auslenken der Ansätze 30 bewirken.

Bei einer zweiten, in den Figuren 6 und 7 dargestellten Ausführungsform der Erfindung entspricht das Abschlußteil 126 im wesentlichen dem oben beschriebenen Abschlußteil 26. Figur 7 zeigt, daß das Abschlußteil 126 ebenfalls einen plattenförmigen Grundkörper 28 aufweist, an welchem hakenartige Ansätze 30 angeordnet sind, deren Hakenschenkel 32 die Ebene des Tragelements 16 queren und mit Krallen 34 die der Scheibe 18 zugewandte Seite des Tragelements bzw. des Wischblatts hintergreifen. Zur Sicherung der Montageposition in Längsrichtung des Wischblatts ist an dem ebenfalls als einteiliges Federband ausgebildeten Tragelement 16 an den Endabschnitten der beiden Tragelement-Längsseiten 128 die dazu erforderliche Rastschulter ausgebildet. Sie befindet sich an aus den Tragelement-Längsseiten 128 seitlich vorspringenden Zähnen 130, deren zum anderen Ende des Tragelements 16 weisende Kanten die Rastschultern 132 bilden. Die mit den Rastschultern 132 zusammenwirkenden Gegenschultern 134 sind durch die den Rastschultern 132 zugewandten Wände von Querkanälen 136 gebildet, welche die hakenartigen Ansätze 30 gegenüber dem Stirnende 138 des Abschlußteils 126 freistellen, so daß diese leichter auslenkbar sind. Wie Figur 6 weiter zeigt, ist im Stirnende 138 eine Ausnehmung 140 zur Aufnahme eines Vorsprungs 142 an der stirnseitigen Endkante 17 des Tragelements 16 vorgesehen, der einer bestimmten Fertigungsverfahren für das Tragelement 16 verbleibt und auf dessen Entstehen später noch eingegangen wird. Selbstverständlich ist es denkbar, den Querkanal 136 auch bei der Ausführungsform der Erfindung gemäß den Figuren 3 bis 5 anstelle der Aushöhlungen 46 anzuordnen. Weiter zeigt Figur 6, daß die beiden Zähne 130 des Tragelements 16 mit zur Endkante 17 geneigt verlaufenden Anlaufschrägungen 131 versehen sind, die im Zusammenwirken mit schrägen Anschlußhälften 133 an den Schenkeln 32 der Ansätze 30 für eine einfache Montage der Abschlußteile 126 sorgen, weil beim Aufschieben der Abschlußteile auf das Tragelement 16 in dessen Längsrichtung die Ansätze selbsttätig elastisch auslenken, bis die Zähne 130 in die Querkanäle 136 gelangen.

Bei einer weiteren, in den Figuren 8 und 9 dargestellten Ausführungsform der Erfindung ist das Tragelement 216 durch zwei langgestreckte, federelastische Halteschienen 218 gebildet. Diese beiden Halteschienen befinden sich bei montiertem Wischblatt jeweils in einer von zwei an den beiden Längsseiten der Wischleiste 220 vorhandenen Längsnuten 222. Zwischen den beiden Längsnuten 222 verbleibt in der Wischleiste ein Steg 224, der den jeweiligen Nutgrund bildet.

Die beiden Halteschienen 218 ragen mit ihren beiden voneinander abgewandten Längskanten 226 aus ihren Längsnuten 222 der Wischleiste 220. An jedem Ende der beiden Halteschienen 218 sind aus den Längskanten 226 vorspringende Ansätze 228 angeordnet, deren zum anderen Ende des Tragelements 216 weisende Schultern 230 mit ihnen zugeordneten Gegenschulter des Abschlußteils 232 zusammenarbeiten, wenn das entsprechende Abschlußteil sich in der in Figur 8 gezeigten Montagestellung befindet. Da das bei dieser Ausführungsform verwendete Abschlußteil im wesentlichen dem Abschlußteil 126 der vorher beschriebenen Ausführungsform entspricht, wird zu dessen Erläuterung auf die zum Abschlußteil 126 gemachte Beschreibung verwiesen. Abweichend vom Abschlußteil 126 gemäß den Figuren 6 und 7 ist das Abschlußteil 232 gemäß den Figuren 8 und 9 lediglich im Bereich seines Grundkörpers 28 mit einer nutartigen Längsaussparung 234 zur Aufnahme des Teils der Wischleiste 220 versehen, welcher sich - wegen der Anordnung der Halteschienen 218 in den Längsnuten 222 der wischleiste - auf der von der Wischlippe 236 der Wischleiste 220 abgewandten Seite verbleibt. Die Montage der Abschlußteile 232 kann so erfolgen, wie dies beispielsweise anhand der Figuren 6 und 7 im vorhergehenden Ausführungsbeispiel erläutert worden ist. Eine weitere Erleichterung der Montage kann dadurch gegeben sein, daß der zwischen den Längsnuten 222 verbleibende Steg 224 bei der Montage der Abschlußteile 232 quer zu seiner Längserstreckung elastisch verformt werden kann. Die mit den Rastschultern 230 der Ansätze 228 zusammenwirkenden Gegenschultern des Abschlußteils 232 entsprechen den Gegenschultern 134 der vorigen Ausführungsform.

Eine weitere, in Figur 10 dargestellte Ausführungsform, die zur Erfindung nicht gehört, gestattet eine Montage des Abschlußteils 326 in Richtung des Pfeils 328. Bei dieser Ausführungsform entspricht das Tragelement vollständig dem Tragelement 16 gemäß den Figuren 3 bis 5. Es hat also ebenfalls an seinen Enden Federlappen 40, welche aus ihm herausgeschert und aus der von der Wischleiste 320 abgewandten Wandfläche herausgedrückt sind. An diesen Federlappen 40 sind die Rastschultern 36 ausgebildet, welche mit entsprechenden Gegenschultern 38 zusammenwirken, die an der Auskehlung 42 im Grundkörper 28 des Abschlußteils 326 angeordnet sind. Bei der Ausführungsform gemäß Figur 10 ist die Wischleiste 320 im wesentlichen so breit, wie das Tragelement 16. Sie hat an ihren beiden einander gegenüberliegenden Längsseiten Längsnuten 322. Abweichend von der Ausführungsform gemäß den Figuren 3 bis 5 sind die hakenartigen Ansätze 330 durch Filmgelenke 332 mit dem Grundkörper 28 des Abschlußteils 326 verbunden. Weiter sind die hakenartigen Ansätze 330 ebenfalls gegenüber der stirnseitigen Endwand 138 (Figuren 6 und 7) des Abschlußteils beispielsweise durch entsprechende Querkanäle 136 freigestellt, so daß sie in Richtung der beiden Doppelpfeile 334 schwenkbar sind. Zur Montage wird das Abschlußteil 326 in Richtung des Pfeiles 328 auf die von der Scheibe abgewandten Bandfläche des Tragelements 16 aufgesetzt, so daß der Federlappen 40 des Tragelements 16 in die Aushöhlung 46 des Abschlußteils 326 gelangt, wobei die Rastschulter 36 und die Gegenschulter 38 eine Längsverschiebung des Abschlußteils 326 verhindern. Die Befestigung des Abschlußteils 326 am Wischblatt wird durch eine entsprechende Schwenkung 334 der hakenartigen Ansätze 330 erreicht und gewährleistet, deren Krallen 336 unter geringfügiger Verformung der ihr zugewandten Wand in diese eiritauchen und dort festgehalten werden. Auch wenn bei dieser Ausführungsform die hakenartigen Ansätze in die Längsnuten der Wischleiste 320 eintauchen, hintergreifen sie doch die der Scheibe zugewandte Seite des Tragelements.

Allen Ausführungsbeispielen ist somit gemeinsam, daß das Abschlußteil 26 bzw. 126 bzw. 232 bzw. 326 einen an der von der Scheibe 18 abgewandten Seite des Tragelements befindlichen, sich am Wischblatt abstützenden Grundkörper 28 hat, welcher mit das Tragelement an dessen beiden Längsseiten querenden, die der Scheibe zugewandte Seite des Tragelements hintergreifenden hakenartigen Ansätzen 30 bzw. 330 versehen ist, daß an jedem der beiden TragelementEndabschnitte zumindest eine zum anderen Endabschnitt weisende Rastschulter 36 bzw. 132 bzw. 230 angeordnet ist, der eine am Abschlußteil vorhandene Gegenschulter 38 bzw. 134 zugeordnet ist, und daß zumindest eine der beiden Schultern elastisch auslenkbar ist. Die Elastizität des für die Herstellung der Abschlußteile 26 bzw. 126 bzw. 232 bzw.-326 zu verwendenden Kunststoffs ist dabei so zu wählen, daß einerseits eine problemlose Montage möglich ist, andererseits jedoch ein zuverlässiger Sitz der Abschlußteile in deren Montageposition sichergestellt ist.

Bei den anhand der Figuren 3 bis 5, 6 und 7 sowie 8 und 9 beschriebenen Ausführungsformen kann es von Vorteil sein, wenn zumindest eine der Krallen 34 zur Sicherung der an den Enden des Wischblatts besonders beanspruchten Verbindung zwischen Tragelement und Wischleiste mit.einem Haltelappen 48 in eine an der Wischleiste 20 bzw. 220 vorhandene Längsaussparung 50 greift.

Gemäß einem möglichen Herstellungsverfahren für das Tragelement 16 (Figur 11) wird dieses mit Hilfe eines Schneidwerkzeuges aus einem breiten Federbandstreifen herausgeschnitten. Um die weitere Bearbeitung des Tragelements 16 zu vereinfachen, läßt man jedoch die nacheinander ausgeschnittenen Tragelemente 16, 16' (strichpunktiert gezeichnet) und folgende durch Verbindungsstege 400 aneinander hängen, so daß die Tragelemente 16, 16' beispielsweise wohlgeordnet durch ein Bad zur Behandlung der Tragelementoberflächen geführt und danach weiteren Behandlungsstationen zugeführt werden können. Kurz vor der Montage des Wischblatts werden die einzelnen Tragelemente 16, 16' durch Brechen der schmalen Verbindungsstege 400 voneinander getrennt, so daß an jedem der Tragelemente die, anhand von Figur 4 beschriebenen Vorsprünge 44 verbleiben.

Gemäß einem anderen möglichen Fertigungsverfahren für das Tragelement 16, 16' (strichpunktiert in Figur 12 dargestellt) wird ein schmales Federstahlband in Längsrichtung durch ein Schneidwerkzeug hindurchgeführt, welches die Tragelemente 16, 16' entsprechend den Anforderungen abhängt, diese jedoch aus dem oben erwähnten Grund über einen schmalen Verbindungssteg 410 aneinander hängen läßt. Auch in diesem Fall wird dadurch eine einfache Weiterbehandlung der Tragelemente 16, 16' möglich, die dann vor der Montage des Wischblatts voneinander getrennt werden, indem die Verbindungsstege 410 gebrochen werden. Es verbleiben dann an jedem Tragelement die anhand von Figur 6 beschriebenen kleinen Vorsprünge 142, welche die Funktion des Tragelements nicht beeinträchtigen.

## Patentansprüche

1. Wischblatt (10) für Scheiben von Kraftfahrzeugen mit einem langgestreckten, federelastischen Tragelement (16), an dessen der Scheibe zugewandten Seite sich eine an der Scheibe anlegbare, langgestreckte, gummielastische Wischleiste (20) längsachsenparallel befindet und auf der von der Scheibe abgewandten Seite des Tragelements in dessen Mittelabschnitt eine Vorrichtung zum Anschließen eines angetriebenen Wischerarms angeordnet ist, wobei die beiden Enden des Wischblatts (10) im Bereich des Tragelements (16) durch je ein Abschlussteil (26) abgedeckt sind, **dadurch gekennzeichnet, dass** das Tragelement (16) breiter ist als die Wischleiste (20) und Seitenbereiche aufweist, die über die Wischleiste vorstehen, dass das Abschlussteil (26) einen an der von der Scheibe (18) abgewandten Seite des Tragelements (16) befindlichen, sich am Tragelement (16) abstützenden Grundkörper (28) hat, welcher mit das Tragelement (16) an dessen beiden Längsseiten querenden, die der Scheibe zugewandte Seite des Tragelements (16) hintergreifenden, hakenartigen Ansätzen (30 bzw. 330) versehen ist, die lediglich die Seitenbereiche des Tragelements umfassen, dass an jedem der beiden Tragelementendabschnitte zumindest eine zum anderen Endabschnitt weisende Rastschulter (36 bzw. 132) angeordnet ist, der eine am Abschlussteil (26 bzw. 126) vorhandene Gegenschulter (38 bzw. 134) zugeordnet ist und dass zumindest eine der beiden Schultern (36, 132, 38, 134) und/oder mindestens einer der beiden Ansätze (30) elastisch auslenkbar ist.

2. Wischblatt nach Anspruch 1, **dadurch gekennzeichnet, daß** das Tragelement (16) als einteiliges Federband ausgebildet ist, an dessen einer, der Scheibe zugewandten Bandfläche die Wischleiste (20) befestigt ist und aus dessen anderer, von der Scheibe abgewandten Bandfläche die Rastschulter (36) ragt.

3. Wischblatt nach Anspruch 2, **dadurch gekennzeichnet, daß** an der dem Tragelement (16) zugewandten Seite des Abschlußteil-Grundkörpers (28) eine Auskehlung (42) angeordnet ist, an welcher die Gegenschulter (38) des Abschlußteils (26) ausgebildet ist.

4. Wischblatt nach einem der Ansprüche 1 bis 3, **dadurch gekennzeichnet, daß** in den das Tragelement (16) querenden Hakenschenkeln (32) der hakenartigen Ansätze (30) des Abschlußteils (26) Aushöhlungen (46) zur Aufnahme von aus den Tragelement-Längsseiten ragenden Vorsprüngen (44) angeordnet sind.

5. Wischblatt nach Anspruch 1, **dadurch gekennzeichnet, daß** das Tragelement (16) als einteiliges Federband ausgebildet ist, an dessen einer, der Scheibe (18) zugewandten Bandfläche die Wischleiste (20) befestigt ist und daß an wenigstens einer der beiden Tragelement-Längsseiten die Rastschulter (132) ausgebildet ist.

6. Wischblatt nach Anspruch 5, **dadurch gekennzeichnet, daß** an den das Tragelement (16) querenden Schenkeln (32) der hakenartigen Ansätze des Abschlußteils (26) die Gegenschulter (134) ausgebildet ist.

7. Wischblatt nach einem der Ansprüche 5 oder 6, **dadurch gekennzeichnet, daß** die Rastschulter (132) an einem aus der Tragelement-Längsseite vorspringenden Rastzahn (130) ausgebildet ist.

8. Wischblatt nach einem der Ansprüche 5 bis 7, **dadurch gekennzeichnet, daß** an der die Stirnseite (17) des Tragelements (16) abdeckenden Innenwand des Abschlußteils (126) eine Ausnehmung (140) zur Aufnahme eines aus der Tragelementstirnseite ragenden Vorsprungs (142) angeordnet ist.

9. Wischblatt nach Anspruch 1, **dadurch gekennzeichnet, daß** das Tragelement (216) zwei langgestreckte, federelastische Halteschienen (218) aufweist, welche je in einer an den beiden Längsseiten der Wischleiste verlaufenden Längsnut (222) angeordnet sind, daß die Halteschienen (218) mit ihren voneinander abgewandten Längskanten aus ihren Längsnuten (222) der Wischleiste (220) ragen und daß an wenigstens einer dieser Längskanten die Rastschulter (230) ausgebildet ist.

10. Wischblatt nach Anspruch 9, **dadurch gekennzeichnet, daß** die der Rastschulter (230) der Halteschienen (218) zugeordnete Gegenschulter des Abschlußteils an den das die beiden Halteschienen aufweisende Tragelement (216) querenden hakenartigen Ansätzen (32, 34) angeordnet sind.

11. Wischblatt nach einem der Ansprüche 1 bis 10, **dadurch gekennzeichnet, daß** das Abschlußteil (26 bzw. 126 bzw. 232 bzw. 326) aus einem elastischen Kunststoff gefertigt ist.

## Claims

1. Wiper blade (10) for the glass surfaces of motor vehicles with an elongated, spring-elastic support element (16), on whose side which faces the glass surface an elongated, rubber-elastic wiper strip (20) which can be placed against the glass surface is situated parallel to the longitudinal axis, and in the central section of which supporting element, on the side of it which faces away from the glass surface, is arranged a device for connecting a driven wiper arm, with the two ends of the wiper blade (10) being covered in the region of the support element (16) by a respective closing part (26), **characterized in that** the support element (16) is wider than the wiper strip (20) and has side regions which protrude over the wiper strip, **in that** the closing part (26) has a basic body (28) which is situated on that side of the support element (16) which faces away from the glass surface (18), is supported on the support element (16) and is provided with hook-like lugs (30 or 300) which cross the support element (16) on both longitudinal sides thereof, engage behind that side of the support element (16) which faces the glass surface and only surround the side regions of the support element, **in that** there is arranged on each of the two support-element end sections at least one latching shoulder (36 or 132) which points towards the other end section and to which a mating shoulder (38 or 134) provided on the closing part (26 or 126) is assigned, and **in that** at least one of the two shoulders (36, 132, 38, 134) and/or at least one of the two lugs (30) is/are elastically deflectable.

2. Wiper blade according to Claim 1, **characterized in that** the support element (16) is designed as a single-part spring band, to whose one band surface, which faces the glass surface, the wiper strip (20) is fastened and from whose other band surface, which faces away from the glass surface, the latching shoulder (36) projects.

3. Wiper blade according to Claim 2, **characterized in that** a channel (42) on which the mating shoulder (38) of the closing part (26) is formed is arranged on that side of the closing-part basic body (28) which faces the support element (16).

4. Wiper blade according to one of Claims 1 to 3, **characterized in that** cavities (46) for receiving projections (44) projecting from the longitudinal sides of the support element are arranged in the hook limbs (32) of the hook-like lugs (30) of the closing part (26), which hook limbs cross the supporting element (16).

5. Wiper blade according to Claim 1, **characterized in that** the support element (16) is designed as a single-part spring band, to whose one band surface, which faces the glass surface (18), the wiper strip (20) is fastened, and **in that** the latching shoulder (132) is formed on at least one of the two longitudinal sides of the support element.

6. Wiper blade according to Claim 5, **characterized in that** the mating shoulder (134) is formed on the limbs (32) of the hook-like lugs of the closing part (26), which limbs cross the support element (16).

7. Wiper blade according to either of Claims 5 or 6, **characterized in that** the latching shoulder (132) is formed on a latching tooth (130) protruding from the longitudinal side of the support element.

8. Wiper blade according to one of Claims 5 to 7, **characterized in that** a recess (140) for receiving a projection (142) projecting out of the end side (17) of the support element is arranged on the inner wall of the closing part (126), which inner wall covers the end side of the support element (16).

9. Wiper blade according to Claim 1, **characterized in that** the support element (216) has two elongated, spring-elastic retaining rails (218) which are arranged in each case in a longitudinal groove (222) running on the two longitudinal sides of the wiper strip, **in that** the retaining rails (218) project with their longitudinal edges, which face away from each other, out of their longitudinal grooves (222) of the wiper strip (220), and **in that** the latching shoulder (230) is formed on at least one of these longitudinal edges.

10. Wiper blade according to Claim 9, **characterized in that** the mating shoulder of the closing part, which mating shoulder is assigned to the latching shoulder (230) of the retaining rails (218), is arranged on the hook-like lugs (32, 34) which cross the support element (216) having the two retaining rails.

11. Wiper blade according to one of Claims 1 to 10, **characterized in that** the closing part (26 or 126 or 232 or 326) is manufactured from a flexible plastic.

## Revendications

1. Balai d'essuie-glace (10) de véhicule automobile comportant un élément de support (16), allongé, élastique, dont le côté tourné vers la vitre est muni d'une lame d'essuyage (20) élastique comme du caoutchouc, allongée, destinée à s'appliquer contre la vitre, cette lame étant parallèle à l'axe longitudinal de l'élément de support et le côté de l'élément de support, non tourné vers la vitre, au niveau de son segment central, est muni d'un dispositif d'accouplement à un bras d'essuie-glace, entraîné, les deux extrémités du balai d'essuie-glace (10) étant couvertes chacune par une pièce de terminaison (26) au niveau de l'élément de support (16)
**caractérisé en ce que**
l'élément de support (16) est plus large que la lame d'essuyage (20) et il ses zones latérales dépassent de la lame d'essuyage,
la pièce de terminaison (26) comporte un corps de base (28) s'appuyant contre l'élément de support (16) du côté de l'élément de support (16) non tourné vers la vitre (18), ce corps de base étant muni de prolongements (30, 330) en forme de crochets, en travers de l'élément de support (16) au niveau de ses deux grands côtés s'accrochant derrière le coté de l'élément de support (16) tourné vers la vitre, ces prolongements entourant uniquement les zones latérales de l'élément de support,
et chacun des deux segments d'extrémité de l'élément de support comporte au moins un épaulement d'accrochage (36, 132) dirigé vers l'autre segment d'extrémité, et coopérant avec un contre-épaulement (38, 134) elle la pièce de terminaison (26, 126), et
au moins l'un des deux épaulements (36, 132, 38, 134) et/ou au moins l'un des deux prolongements (30) peut se déformer élastiquement.

2. Balai d'essuie-glace selon la revendication 1,
**caractérisé en ce que**
l'élément de support (16) est réalisé sous la forme d'un ruban élastique en une seule pièce et la face du ruban tournée vers la vitre porte solidairement la lame d'essuyage (20) et l'épaulement d'accrochage (36) vient en saillie de l'autre face du ruban non tournée vers la vitre.

3. Balai d'essuie-glace selon la revendication 2,
**caractérisé en ce que**
le côté du corps de base (28) de la pièce de terminaison, tourné vers l'élément de support (16) comporte une cavité (42) dans laquelle est réalisé le contre-épaulement (38) de la pièce de terminaison (26).

4. Balai d'essuie-glace selon l'une des revendications 1 à 3,
**caractérisé en ce que**
en travers de l'élément de support les branches (32) des prolongements en forme de crochets (30) de la pièce de terminaison (26), (16) comportent des cavités (46) pour recevoir des languettes en saillie (44) par rapport aux grands côtés de l'élément de support.

5. Balai d'essuie-glace selon la revendication 1,
**caractérisé en ce que**
l'élément de support (16) est un ruban élastique en une seule pièce dont la face du ruban tournée vers la vitre (18) porte solidairement la lame d'essuyage (20) et l'épaulement d'accrochage (132) est réalisé dans au moins l'un des grands côtés des deux éléments de support.

6. Balai d'essuie-glace selon la revendication 5,
**caractérisé en ce que**
en travers de l'élément de support (16), les branches (32) des prolongements en forme de crochets de la pièce de terminaison (26) sont munies du contre-épaulement (134).

7. Balai d'essuie-glace selon l'une des revendications 5 ou 6,
**caractérisé en ce que**
l'épaulement d'accrochage (132) est réalisé sur une dent d'accrochage en saillie du grand côté longitudinal de l'élément de support.

8. Balai d'essuie-glace selon l'une des revendications 5 à 7,
**caractérisé en ce que**
la paroi intérieure de la pièce de terminaison (126) couvrant la face frontale (17) de l'élément de support (16) comporte une cavité (140) pour recevoir une partie en saillie (142) dépassant de la face frontale de l'élément de support.

9. Balai d'essuie-glace selon la revendication 1,
**caractérisé en ce que**
l'élément de support (216) se compose de deux rails de fixation (218) ayant l'élasticité de ressorts, allongés, et ces rails viennent chacun dans une rainure longitudinale (222) dans les deux grands côtés de la lame d'essuyage,
les rails de fixation (218) dépassent par leurs arêtes longitudinales non tournées l'une vers l'autre, par rapport aux rainures longitudinales (222) de la lame d'essuyage (220) et
au moins l'une de ces arêtes longitudinales est munie de l'épaulement d'accrochage (230).

10. Balai d'essuie-glace selon la revendication 9,
**caractérisé en ce que**
les contre-épaulements de la pièce de terminaison associés aux épaulements d'accrochage (230) des rails de fixation (218) sont prévus sur les prolongements en forme de crochets (32, 34) de l'élément de support (216) muni des deux rails de fixation.

11. Balai d'essuie-glace selon l'une des revendications 1 à 10,
**caractérisé en ce que**
la pièce de terminaison (26, 126, 232, 326) est en matière plastique élastique.
